# EUROPÄISCHE PATENTANMELDUNG

(11) **EP 0 942 305 A1**
(43) Veröffentlichungstag der Anmeldung: **15.09.1999**
(21) Anmeldenummer: 99890029.4
(22) Anmeldetag: 28.01.1999
(51) Int. Cl.: G02B 7/10, G03B 17/14

(54) **Steuerungssystem für ein Objektiv einer Kamera**

(30) Priorität: 09.03.1998 AT 40798
(71) Anmelder: Bauer, Fritz, A-3002 Purkersdorf (AT)
(72) Erfinder: Bauer, Fritz, A-3002 Purkersdorf (AT)
(74) Vertreter: Gibler, Ferdinand, Dipl.-Ing. Dr. techn.

(57) **Zusammenfassung**

Steuerungssystem für ein Objektiv (1) einer Kamera, insbesondere einer Filmkamera, mit einem oder mehreren Antriebseinheiten zur automatischen Einstellung von Positionen zumindest eines Objektivrings (22, 23, 24), z.B. für Schärfe, Irisblende, Brennweite, über welche Antriebseinheiten ein vorbestimmbarer Soll-Zustand des oder der Objektivringe einstellbar ist, wobei jeweils eine mit dem oder den Objektivringen (22, 23, 24) gekoppelte Vorrichtung zur Ermittlung des Ist-Zustandes der Objektivringposition (5, 6, 7) vorgesehen ist, welche die tatsächliche Position des oder der Objektivringe (22, 23, 24) relativ zum Objektiv (1) ermittelt und in ein Meßausgangssignal umwandelt.

## Beschreibung

Die Erfindung betrifft ein Steuerungssystem für ein Objektiv einer Kamera, insbesondere einer Filmkamera, mit einem oder mehreren Antriebseinheiten zur automatischen Einstellung von Positionen zumindest eines Objektivrings, z.B. für Schärfe, Irisblende, Brennweite, über welche Antriebseinheiten ein vorbestimmbarer Soll-Zustand des oder der Objektivringe einstellbar ist.

Bekannte Steuerungssysteme dieser Art ermöglichen die ferngesteuerte Einstellung von verschiedenen Objektivringen auf einem Kameraobjektiv. Die auf einer Einstellvorrichtung vorgegebene Winkelstellung des jeweiligen Objektivringes wird dabei durch Motorantrieb vorgenommen, wobei immer von der vorhergehenden Stellung in Inkrementalschritten auf die nächste gewünschte Objektivringposition übergegangen wird. Dabei summiert sich aber nach mehreren Verstellvorgängen der jeweils auftretende Fehler, sodaß nach einigen Vorgängen dieser Art eine merkbare Fehleinstellung zustande kommt, die den Kamerabetrieb stört, da regelmäßig ein Abgleich durch händisches Nachstellen vorgenommen werden muß.

Da vielfach bereits vollkommen automatisch verschwenkbare Filmkameras in Verwendung stehen, um besondere Kamerastellungen verwirklichen zu können, welche aber für den Kamerassistenten oft unerreichbar angebracht sind, müssen aufgrund dieser Ungenauigkeiten der automatischen Objektivringeinstellungen oftmals Filmszenen nochmals aufgenommen werden, da Fehlbelichtungen oder Unschärfen die gedrehten Szenen unbrauchbar machen.

Aufgabe der Erfindung ist es daher, ein System der eingangs genannten Art anzugeben, mit dessen Hilfe eine exakte Winkelpositionierung des oder der Objektivringe auf dem Kameraobjektiv möglich ist.

Erfindungsgemäß wird dies dadurch erreicht, daß jeweils eine mit dem oder den Objektivringen gekoppelte Vorrichtung zur Ermittlung des Ist-Zustandes der Objektivringposition vorgesehen ist, welche die tatsächliche Position des oder der Objektivringe relativ zum Objektiv ermittelt und in ein Meßausgangssignal umwandelt.

Durch die Ermittlung des Ist-Zustandes kann die jeweils auftretende Abweichung vom Soll-Zustand des jeweiligen Objektringes genau bestimmt und darauffolgend korrigiert werden. Damit stehen die tatsächlichen Positionswerte der Obkjektivringe jederzeit zur Verfügung und müssen nicht umständlich von einem Assistenten oder vom Kameramann selbst abgelesen werden. Bei sehr exponiert gelegenen Kamerastellungen ist es daher möglich, eine Fernablesung der tatsächlichen Objektivringwerte und über Fernsteuerung erforderliche Korrekturen auszuführen.

In weiterer Ausbildung der Erfindung kann vorgesehen sein, daß die Vorrichtung zur Ermittlung des Ist-Zustandes der Objektivringposition aus einem optischen Winkelaufnehmer gebildet ist, der aus einem vorzugsweise mit dem Objektivring drehfest verbundenen Kodierelement mit optisch über Reflexion oder Transmission von Licht auslesbaren Kodespuren und einem Lichtsender und -Empfängersystem gebildet ist, welcher Lichtempfänger das Meßausgangssignal erzeugt.

Durch entsprechende Kodierung kann damit eine sehr hochauflösende und daher exakte Bestimmung der jeweiligen Objektivringposition durchgeführt werden, die ohne die Objektivringeinstellung behindernden, mechanischen Reibungskräfte vorgenommen werden kann.

Gemäß einer Variante der Erfindung kann vorgesehen sein, daß die Vorrichtung zur Ermittlung des Ist-Zustandes der Objektivringposition ein magnetisches Wegaufnehmersystem ist, das aus einem, vorzugsweise auf dem Objektivring aufgebrachten, mit magnetischen Partikeln gefüllten Band, das vorzugsweise in mehreren parallelen Spuren periodisch polarisiert ist, und einem das Band berührungsfrei abtastenden Magnetsensor gebildet ist, welcher das Meßausgangssignal erzeugt.

Damit ist eine sehr exakte Bestimmung der Position des jeweiligen Objektivringes möglich, ohne daß dabei eine direkte mechanische Kopplung mit dem Objektivring vorgenommen werden muß.

Für diese Zwecke hat es sich als besonders vorteilhaft herausgestellt, wenn der Magnetsensor ein magnetoresistiver Magnetsensor ist.

Gemäß einer anderen Variante der Erfindung kann vorgesehen sein, daß die Vorrichtung zur Ermittlung des Ist-Zustandes der Objektivringposition aus einem im Bereich des Objektivringes um den Objektivumfang verlaufenden Wellenleiter und einem mit dem Objektivring an einer Stelle verbundenen Magnet gebildet ist, der zumindest teilweise innerhalb des Wellenleiters verschiebbar geführt ist, wobei im Wellenleiter ein elektromagnetisches Sendeelement und ein akustisches Empfangselement angeordnet sind und die ermittelte Zeitdifferenz zwischen dem vom Sendeelement ausgesandten Signal und dem vom Empfangselement empfangenen Signal das Meßausgangssignal darstellt.

Diese Ausführungsform ermöglicht ebenso ein hochpräzises, eindeutiges Bestimmen der Objektivringposition.

Es kann aber auch gemäß einer weiteren Ausführungsform der Erfindung vorgesehen sein, daß die Vorrichtung zur Ermittlung des Ist-Zustandes der Objektivringposition aus einer an diesem angebrachten Elektrode gebildet ist, die über eine auf dem Objektiv aufgebrachte, in Abhängigkeit von der Position des Objektivringes sich vergrößernde bzw. verkleinernde zweigeteilte Elektrode berührungsfrei schwenkbar ist, wobei aus dem Verhältnis der zwischen den zweigeteilten Bereichen der Elektrode gemessenen Kapazitäten gegenüber der verschwenkbaren Elektrode das Meßausgangssignal erzeugt wird.

Auf diese Weise kann die Positionsbestimmung kapazitiv und ebenfalls berührungsfrei vorgenommen werden.

Gemäß einem weiteren Ausführungsbeispiel der Erfindung kann vorgesehen werden, daß die zweigeteilte Elektrode in flachem Zustand ein entlang einer Diagonale getrenntes Rechteck darstellt. Bei Objektivringen, die sich mehr als 180° verdrehen lassen, kann eine entsprechend dem schraubenförmigen Verlauf dieser Schwenkbewegung sich erstreckende Elektrode auf dem Objektiv aufgebracht sein.

Um die ermittelten Ist-Zustands-Meßwerte an eine Stelle übertragen zu können, an der sie überprüft werden können, kann gemäß einem weiteren Ausführungsbeispiel der Erfindung vorgesehen sein, daß der Meßausgang der Vorrichtung zur Ermittlung des Ist-Zustandes jeweils mit einem der Eingänge einer Meßsignalsende-Einheit verbunden ist, und daß deren Ausgang mit einer Meßsignalsempfangs-Einheit verbunden ist, mit der der Ist-Zustand des oder der Objektivringe über eine oder mehrere in der Meßsignalempfangs-Einheit angeordneten Anzeigen anzeigbar ist.

Damit auch bei extremen Kamerapositionen eine sichere Übertragung der Ist-Zustands-Meßwerte vorgenommen werden kann, kann die Meßsignalsende-Einheit einen Funksendeteil und die Meßsignalempfangs-Einheit einen entsprechenden Funkempfangsteil aufweisen, über die Meßsignal-Daten übermittelbar sind.

Die Meßsignalsende-Einheit kann dabei auf der zum Objektiv zugehörigen Kamera anbringbar oder ein Bestandteil derselben sein. Es sind aber auch andere Anbringungsorte der Meßsignalsende-Einheit ausführbar.

Gemäß einem weiteren Ausführungsbeispiel der Erfindung kann vorgesehen sein, daß in der Meßsignalsende-Einheit zusätzlich eine mit dem oder den Antrieben zur Positionierung der Objektivringe elektrisch verbundene Steuerempfangseinheit und in der Meßsignalempfangs-Einheit zusätzlich eine Steuersendeeinheit mit Steuereinstellelementen vorgesehen sind, über die der Soll-Zustand des oder der Objektivringe einstellbar ist.

Es können damit die Steuereinrichtungen und die Ist-Zustandeinheiten in sinnvoller Weise zusammengefaßt werden, sodaß diese nicht in getrennten Einheiten vorliegen.

Schließlich kann in weiterer Ausbildung der Erfindung vorgesehen sein, daß die Meßsignalempfangs-Einheit mit einer Vorrichtung zur Ermittlung und Anzeige der Tiefenschärfe verbunden ist, über die aus den aktuellen Ist-Zuständen der Objektivringe die für das Objektiv tatsächlich ausnützbare Tiefenschärfe ermittelbar und optisch anzeigbar ist. Damit kann zu jeder Zeit eine Aussage getroffen, wie weit sich der Schärfenbereich der eingestellten Objektiveinstellung tatsächlich erstreckt. Auf diese Weise kann vermieden werden, daß eine bereits gedrehte Filmszene nochmals aufgenommen werden muß, weil die Schauspieler oder der Drehort bei einer Kamerabewegung aus dem Schärfebereich gelangt. Da die tatsächlichen Daten über die Objektivringpositionen automatisch verfügbar sind, kann solcherart automatisch ohne mühsames Ablesen von Tabellen eine wahre Aussage über die tatsächlich verfügbare Tiefenschärfe getroffen werden.

Nachstehend wird die Erfindung anhand der in den Zeichnungen dargestellten Ausführungsbeispiele eingehend erläutert. Es zeigt dabei
Fig.1 eine schematische Gesamtansicht einer Ausführungsform des erfindungsgemäßen Steuerungssystems und
Fig.2 und 3 jeweils eine Ausführungsform einer Vorrichtung zur Ermittlung des Ist-Zustandes der Objektivringposition.

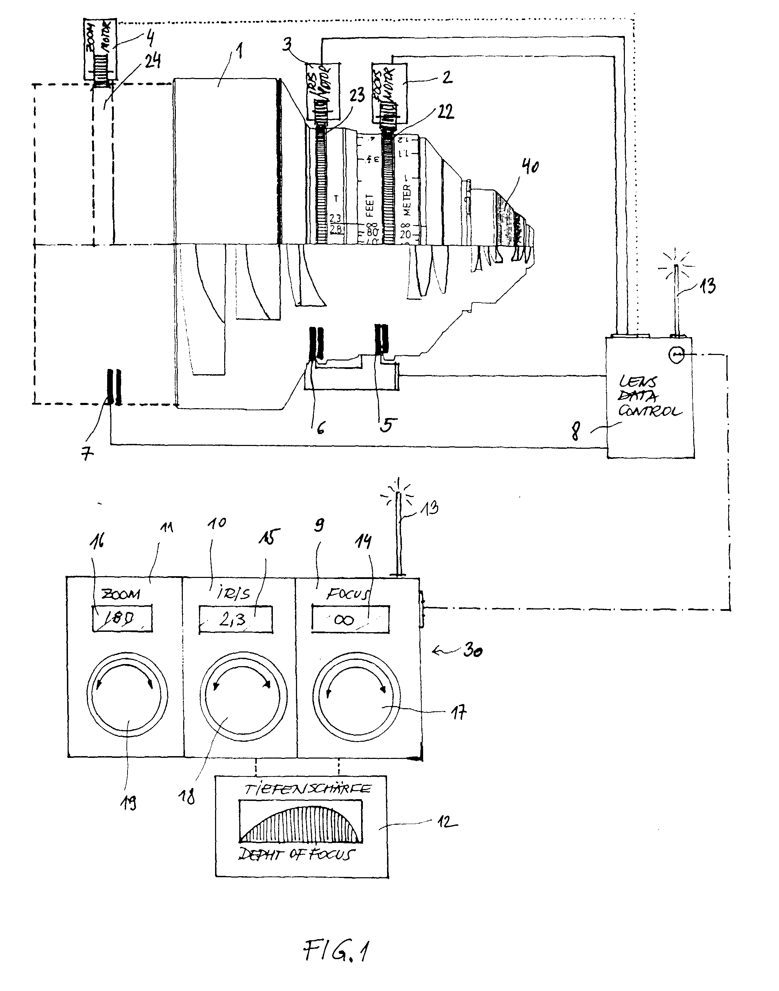

In Fig.1 ist ein Steuerungssystem für ein Objektiv 1 einer Filmkamera dargestellt, welches über insgesamt drei Objektivringe 22, 23, 24 verfügt, über die die Schärfe, die Blendenöffnung der Irisblende und die Brennweite des Objektivs einstellbar sind. Das Objektiv 1 beinhaltet dabei ein System an optischen Linsen, die in halbaufgerissenem Zustand des Objektivs dargestellt sind. Das Objektiv ist über einen Bajonettanschluß 40 mit der Objektivöffnung einer Filmkamera zu verbinden. Grundsätzlich ist das erfindungsgemäße System auch auf andere Kamera- und Objektivarten anwendbar.

Das Objektiv 1 ist mit mehreren Antriebseinheiten 2, 3 ,4 zur automatischen Einstellung von Positionen der Objektivringe 22, 23, 24 ausgerüstet, mit denen ein vorbestimmbarer Soll-Zustand der Objektivringe einstellbar ist. Erfolgt ein Steuerbefehl für einen der Antriebe, so versetzt dieser über ein von einem Motor angetriebenes Zahnrad den Objektivring in eine Drehbewegung und hält diesen bei der befohlenen Position an. Aufgrund der Drehbewegung der Objektivringe ereignet sich im Inneren des Objektivs 1 eine automatische Verschiebung der optischen Linsen bzw. eine Vergrößerung oder Verkleinerung der Irisblende. Die Anzahl und die Funktion der Objektivringe ist in keiner Richtung eingeschränkt und kann beliebig variieren.

Zusätzlich kann immer noch eine Verstellung des Objektivringes von Hand aus erfolgen, wenn keine motorgesteuerte Betätigung erwünscht ist.

Im Betrieb hat sich gezeigt, daß bisher auch eine noch so genaue automatische Einstellung der Objektivringe dennoch einer präzisen Handeinstellung unterlegen war, da die Antriebseinheiten über den gesamten Umfang des Objektivs und über mehrere Verstellvorgänge hinweg nicht die erforderliche Genauigkeit erbringen können.

Um dem abzuhelfen, ist erfindungsgemäß jeweils eine mit den Objektivringen 22, 23, 24 gekoppelte Vorrichtung zur Ermittlung des Ist-Zustandes der Objektivringposition 5, 6, 7 vorgesehen, welche die tatsächliche Position der Objektivringe 22, 23, 24 relativ zum Objektiv 1 ermittelt und in ein Meßausgangssignal umwandelt.

Damit können die tatsächlich über die Antriebseinheiten 22, 23, 24 ausgeführten Einstellbewegungen kontrolliert und gegebenenfalls nachgestellt werden.

Die Kopplung der Objektivringe und der Vorrichtungen zur Ermittlung des Ist-Zustandes 5, 6, 7 kann auf vielfältige Weise geschehen und ist nachstehend anhand einiger Ausführungsbeispiele erläutert. Grundsätzlich kann dafür jede mögliche Vorrichtung zur Positionsermittlung verwendet werden.

Im Ausführungsbeispiel gemäß Fig. 2 ist die Ist-Ermittlungsvorrichtung aus einem optischen Winkelaufnehmer gebildet, der sich aus einem mit dem nicht dargestellten Objektivring drehfest verbundenen Kodierelement 35 mit optisch über Transmission von Licht auslesbaren Kodespuren und einem Lichtsender und -Empfängersystem 34, 36 gebildet ist. Das Meßausgangssignal wird über den Lichtempfänger 36 erzeugt. Es kann auch eine reflektierende Kodierscheibe verwendet werden. In diesem Fall müßte der Lichtempfänger auf derselben Seite wie der Lichtsender 34 angeordnet sein. Zur besseren Beleuchtung und Auslesung der Spuren und zur Vermeidung von Übersprechen zwischen den Kodespuren wird ein Kondensor 37 zwischen Lichtsender 34 und Lichtempfänger 36 angeordnet. Für eine gute Auflösung der jeweiligen Winkelstellung sind mehrere Kodespuren auf der Kodierscheibe vorzusehen, dementsprechend ist auch der Lichtempfänger in mehrere aktive Elemente unterteilt.

Eine weitere nicht dargestellte Ausführungsform einer Vorrichtung zur Ermittlung des Ist-Zustandes der Objektivringposition besteht aus einem magnetischen Wegaufnehmersystem. Dieses setzt sich aus einem, vorzugsweise auf dem Objektivring aufgebrachten, mit magnetischen Partikeln gefüllten Band, das vorzugsweise in mehreren parallelen Spuren periodisch polarisiert ist, und einem das Band berührungsfrei abtastenden Magnetsensor zusammen, welcher das Meßausgangssignal erzeugt. Die parallelen Spuren können sinusförmig oder rechteckförmig periodisch polarisiert sein. Der Magnetsensor, der vorzugsweise ein magnetoresistiver Magnetsensor ist, wird entsprechend der Winkelstellung des Objektivringes in geringem Abstand über das Band geführt und tastet dabei die magnetischen Signaturen ab.

Die magnetoresistiven Sensorelemente variieren ihren Widerstand in Abhängigkeit von der Magnetfeldstärke, sodaß bei Konstantstromspeisung dieser Elemente eine Spannung an diesen abgegriffen werden kann, die mit dem sich verändernden Magnetfeld des Bandes moduliert ist. Die Sensorelemente sind in Halbleitertechnik aufgebaut und können daher sehr klein ausgeführt werden. Das Ausgangssignal des Magnetsensors wird über eine Signalverarbeitungselektronik ausgewertet, die je nach Modulationsart des Bandes sowohl digitale als auch analoge Signale zur Positionsbestimmung verarbeiten kann.

Um eine höhere Auflösung erreichen zu können, werden definiert phasenverschobene Magnetspuren auf das Band geschrieben, so daß bei dessen Abtastung sich phasenverschobene Signale ergeben, aus denen auch zwischen den Magnetisierungsperioden liegende Stellen des Bandes aufgelöst werden können. Das Meßverfahren arbeitet inkremental und bedarf daher einer Referenzdefinition. Eine absolute Positionsbestimmung ist durch Abtastung von mehreren parallelen Spuren möglich.

Eine weitere Ausführungsform der Vorrichtung zur Ermittlung des Ist-Zustandes der Objektivringposition kann aus einem im Bereich des Objektivringes um den Objektivumfang verlaufenden Wellenleiter und einem mit dem Objektivring an einer Stelle verbundenen Magnet gebildet sein.

Der Magnet ist zumindest teilweise innerhalb des Wellenleiters verschiebbar geführt, wobei im Wellenleiter ein elektromagnetisches Sendeelement und ein akustisches Empfangselement angeordnet sind.

Durch das Sendeelement wird ein elektromagnetischer Impuls erzeugt, der auf das permanentmagnetische Feld des in Abhängigkeit von der Objektivringposition verschobenen Magneten auftrifft, wodurch an der jeweiligen Stelle des Wellenleiters ein Drehimpuls bzw. ein Torsionsimpuls ausgelöst wird. Dieser läuft mit konstanter Schallgeschwindigkeit vom Meßort zum akustischen Empfangselement und wird dort in einen elektrischen Impuls gewandelt, der registriert wird.

Die ermittelte Zeitdifferenz zwischen dem vom Sendeelement ausgesandten Signal und dem vom akustischen Empfangselement empfangenen Signal stellt das Meßausgangssignal dar. Die Laufzeitmessung entspricht einer Entfernungsinformation zwischen Magnet und akustischem Empfangselement und muß nachfolgend in eine entsprechende Winkelinformation umgewandelt werden.

Eine weitere Ausführungsform einer Ist-Zustandsermittlungsvorrichtung besteht darin, daß am Objektivring 22, 23, 24 eine Elektrode angebracht ist, die über eine auf dem Objektiv aufgebrachte, in Abhängigkeit von der Position des Objektivringes 22, 23, 24 sich vergrößernde bzw. verkleinernde zweigeteilte Elektrode 42 berührungsfrei schwenkbar ist. Aus dem Verhältnis der zwischen den zweigeteilten Bereichen 41 der Elektrode 42 gemessenen Kapazitäten gegenüber der verschwenkbaren Elektrode 40 wird das Meßausgangssignal erzeugt, aus dem eine absolute Positionsinformation des Objektivringes erhältlich ist.

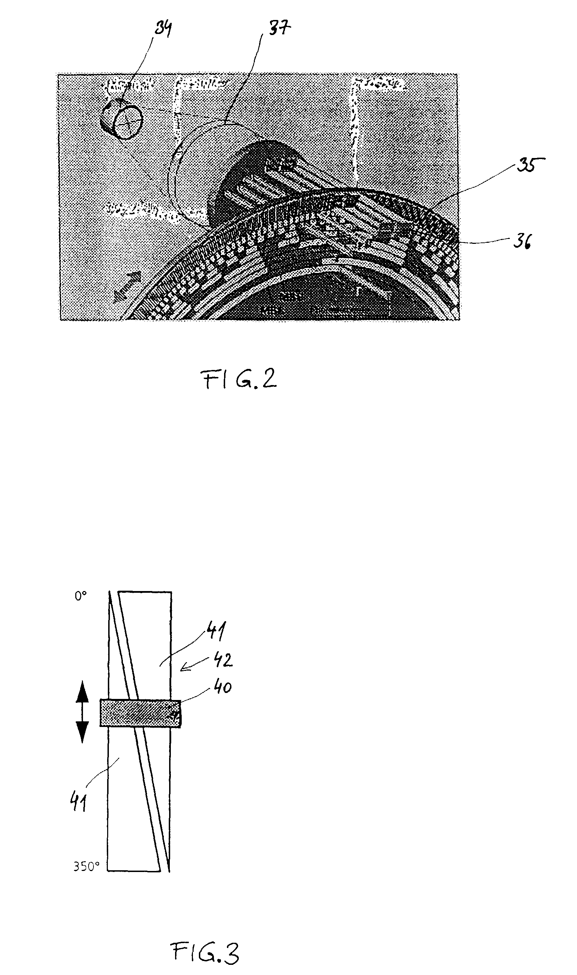

Die zweigeteilte Elektrode 42 stellt gemäß Ausführungsbeispiel Fig. 3 in flachem Zustand ein entlang einer Diagonale getrenntes Rechteck dar, das sich aus den rechtwinkeligen Dreiecken 41 zusammensetzt. Es kann aber auch eine andere zweigeteilte Form der Elektrode 42 gewählt werden.

Um eine sehr hohe Auflösung zu erreichen, müssen die auftretenden Streukapazitäten durch entsprechende Abschirmung eliminiert werden. Um möglichst große Kapazitäten zu erhalten, ist bei sehr kleinem Abstand zwischen der schwenkbaren Elektrode 40 und der zweigeteilten Elektrode 42 eine Zwischenlage mit relativ hoher Dielektrizitätszahl erforderlich, z.B. eine Teflonschicht, auf der die schwenkbare Elektrode 40 gleitet. Soll aber eine gänzlich berührungslose Kopplung erfolgen, muß gegebenenfalls eine Verstärkung der gemessenen Signale vorgenommen werden.

Aus Fig. 1 ist weiters zu ersehen, daß der Meßausgang der Vorrichtung zur Ermittlung des Ist-Zustandes 5, 6, 7 jeweils mit einem der Eingänge einer Meßsignalsende-Einheit 8 verbunden ist. Diese nimmt die Meßsignale aus den Ist-Zustandsermittlungsvorrichtungen 5, 6, 7 auf und gibt sie an eine Meßsignalsempfangs-Einheit 30 weiter, mit der sie verbunden ist.

Diese Verbindung kann auf verschiedenste Weise, z.B. Infrarot, Ultraschall, elektrische Leitung o.ä. erfolgen, dargestellt ist eine Funkverbindung, die durch Antennen 13 symbolisiert ist. Zu diesem Zweck ist die Meßsignalsende-Einheit 8 mit einem Funksendeteil und die Meßsignalempfangs-Einheit 30 mit einem entsprechenden Funkempfangsteil ausgestattet, über die Meßsignal-Daten übermittelt werden können. Diese können bereits geeignet verarbeitet sein oder erst nach der Übertragung weiterverarbeitet werden.

Die Meßsignalsende-Einheit 8 kann entweder auf der zum Objektiv zugehörigen Kamera angebracht oder ein Bestandteil derselben sein. Sie kann aber auch von einem Assistenten neben dem Kameramann mitgeführt werden.

Aufgrund der Funkverbindung sind besonders Kamerastandorte bevorzugt, die mit einer automatischen Kameraführung ausgestattet sind und daher die Objektiveinstellung nicht von Hand aus vorgenommen werden kann.

In der Meßsignalempfangs-Einheit 30 sind mehrere Anzeigen 14, 15, 16 angeordnet, mit der die ausgewerteten Meßsignale über den Ist-Zustand der einzelnen Objektivringe 22, 23, 24 angezeigt und abgelesen werden können. So ist in Fig.1 die Schärfestellung auf den Wert unendlich, die Irisblende auf den Wert 2,3 und die Brennweite auf 180mm eingestellt. Dies entspricht den tatsächlich auf dem Objektiv festgestellten Werten, die von den zuvor eingegebenen Soll-Werten abweichen können.

Im Ausführungsbeispiel gemäß Fig. 1 ist in der Meßsignalsende-Einheit 8 zusätzlich eine mit den Antrieben 2, 3, 4 zur Positionierung der Objektivringe 22, 23, 24 elektrisch verbundene Steuerempfangseinheit und in der Meßsignalempfangs-Einheit 30 zusätzlich eine Steuersendeeinheit mit Steuereinstellelementen 17, 18, 19 vorgesehen. Diese Steuereinheiten könnten auch getrennt von den Meßsignal-Einheiten angeordnet sein, der Einfachheit halber sind sie aber mit diesen vereint, sodaß über sie der Soll-Zustand der Objektivringe 22, 23, 24 einstellbar ist. Somit kann über die hier als Drehknöpfe ausgeführten Steuereinstellemente 17, 18, 19 der gewünschte Wert der Objektivringposition vorgegeben werden, woraufhin dieser über Funk als Steuerbefehl den Antriebseinheiten 2, 3, 4 übermittelt wird, die den jeweiligen Objektivring 22, 23, 24 entsprechend in Bewegung setzen.

Auf den Anzeigen 14, 15, 16 wird bei Veränderung von einem zu einem anderen Einstellwert der Ist-Zustand der Objektivringe 22, 23, 24 angezeigt und es kann mit den Drehknöpfen 17, 18 oder 19 durch Verdrehen solange eine Korrektur vorgenommen werden, bis die gewünschten Werte auf dem Objektiv 1 erzielt werden.

Da über die tatsächlich eingestellten Objektivringwerte verfügt werden kann, ist es auch möglich, die Tiefenschärfe exakt zu bestimmen und anzugeben. Dies hat den Vorteil, daß der Kameramann genau darüber Bescheid weiß, innerhalb welcher Grenzen - bildlich gesprochen - die Scharfstellung auf dem belichteten Film reichen wird. Um dabei ohne die bekannten Ablesetabellen auszukommen, ist vorgesehen, daß die Meßsignalempfangs-Einheit 30 mit einer Vorrichtung zur Ermittlung und Anzeige der Tiefenschärfe 12 verbunden ist, über die aus den aktuellen Ist-Zuständen der Objektivringe 22, 23, 24 die für das Objektiv 1 tatsächlich ausnützbare Tiefenschärfe ermittelt und optisch angezeigt wird. Damit kann der Tiefenschärfebereich auf einem Blick abgelesen werden.

## Patentansprüche

1. Steuerungssystem für ein Objektiv einer Kamera, insbesondere einer Filmkamera, mit einem oder mehreren Antriebseinheiten zur automatischen Einstellung von Positionen zumindest eines Objektivrings, z.B. für Schärfe, Irisblende, Brennweite, über welche Antriebseinheiten ein vorbestimmbarer Soll-Zustand des oder der Objektivringe einstellbar ist, **dadurch gekennzeichnet**, daß jeweils eine mit dem oder den Objektivringen (22, 23, 24) gekoppelte Vorrichtung zur Ermittlung des Ist-Zustandes der Objektivringposition (5, 6, 7) vorgesehen ist, welche die tatsächliche Position des oder der Objektivringe (22, 23, 24) relativ zum Objektiv (1) ermittelt und in ein Meßausgangssignal umwandelt.

2. Steuerungssystem nach Anspruch 1, **dadurch gekennzeichnet**, daß die Vorrichtung zur Ermittlung des Ist-Zustandes der Objektivringposition aus einem optischen Winkelaufnehmer gebildet ist, der aus einem vorzugsweise mit dem Objektivring drehfest verbundenen Kodierelement mit optisch über Reflexion oder Transmission von Licht auslesbaren Kodespuren und einem Lichtsender und -Empfängersystem gebildet ist, welcher Lichtempfänger das Meßausgangssignal erzeugt.

3. Steuerungssystem nach Anspruch 1, **dadurch gekennzeichnet**, daß die Vorrichtung zur Ermittlung des Ist-Zustandes der Objektivringposition ein magnetisches Wegaufnehmersystem ist, das aus einem, vorzugsweise auf dem Objektivring aufgebrachten, mit magnetischen Partikeln gefüllten Band, das vorzugsweise in mehreren parallelen Spuren periodisch polarisiert ist, und einem das Band berührungsfrei abtastenden Magnetsensor gebildet ist, welcher das Meßausgangssignal erzeugt.

4. Steuerungssystem nach Anspruch 3, **dadurch gekennzeichnet**, daß der Magnetsensor ein magnetoresistiver Magnetsensor ist.

5. Steuerungssystem nach Anspruch 1, **dadurch gekennzeichnet**, daß die Vorrichtung zur Ermittlung des Ist-Zustandes der Objektivringposition aus einem im Bereich des Objektivringes um den Objektivumfang verlaufenden Wellenleiter und einem mit dem Objektivring an einer Stelle verbundenen Magnet gebildet ist, der zumindest teilweise innerhalb des Wellenleiters verschiebbar geführt ist, wobei im Wellenleiter ein elektromagnetisches Sendeelement und ein akustisches Empfangselement angeordnet sind und die ermittelte Zeitdifferenz zwischen dem vom Sendeelement ausgesandten Signal und dem vom Empfangselement empfangenen Signal das Meßausgangssignal darstellt.

6. Steuerungssystem nach Anspruch 1, **dadurch gekennzeichnet**, daß die Vorrichtung zur Ermittlung des Ist-Zustandes der Objektivringposition aus einer an diesem angebrachten Elektrode (40) gebildet ist, die über eine auf dem Objektiv (1) aufgebrachte, in Abhängigkeit von der Position des Objektivringes (22, 23, 24) sich vergrößernde bzw. verkleinernde zweigeteilte Elektrode (42) berührungsfrei schwenkbar ist, wobei aus dem Verhältnis der zwischen den zweigeteilten Bereichen (41) der Elektrode (42) gemessenen Kapazitäten gegenüber der verschwenkbaren Elektrode (40) das Meßausgangssignal erzeugt wird.

7. Steuerungssystem nach Anspruch 6, **dadurch gekennzeichnet,** daß die zweigeteilte Elektrode in flachem Zustand ein entlang einer Diagonale getrenntes Rechteck darstellt.

8. Steuerungssystem nach einem der Ansprüche 1 bis 7, **dadurch gekennzeichnet**, daß der Meßausgang der Vorrichtung zur Ermittlung des Ist-Zustandes (5, 6, 7) jeweils mit einem der Eingänge einer Meßsignalsende-Einheit (8) verbunden ist, und daß deren Ausgang mit einer Meßsignalsempfangs-Einheit (30) verbunden ist, mit der der Ist-Zustand des oder der Objektivringe (22, 23, 24) über eine oder mehrere in der Meßsignalempfangs-Einheit (30) angeordneten Anzeigen (14, 15, 16) anzeigbar ist.

9. Steuerungssystem nach Anspruch 8, **dadurch gekennzeichnet**, daß die Meßsignalsende-Einheit (8) einen Funksendeteil und die Meßsignalempfangs-Einheit (30) einen entsprechenden Funkempfangsteil aufweisen, über die Meßsignal-Daten übermittelbar sind.

10. Steuerungssystem nach Anspruch 8 oder 9, **dadurch gekennzeichnet**, daß die Meßsignalsende-Einheit (8) auf der zum Objektiv zugehörigen Kamera anbringbar oder ein Bestandteil derselben ist.

11. Steuerungssystem nach Anspruch 10, **dadurch gekennzeichnet**, daß in der Meßsignalsende-Einheit zusätzlich eine mit dem oder den Antrieben (2, 3, 4) zur Positionierung der Objektivringe (22, 23, 24) elektrisch verbundene Steuerempfangseinheit und in der Meßsignalempfangs-Einheit zusätzlich eine Steuersendeeinheit mit Steuereinstellelementen (17, 18, 19) vorgesehen sind, über die der Soll-Zustand des oder der Objektivringe (22,23, 24) einstellbar ist.

12. Steuerungssystem nach einem der Ansprüche 8 bis 11, **dadurch gekennzeichnet**, daß die Meßsignalempfangs-Einheit (30) mit einer Vorrichtung zur Ermittlung und Anzeige der Tiefenschärfe (12) verbunden ist, über die aus den aktuellen Ist-Zuständen der Objektivringe (22, 23, 24) die für das Objektiv (1) tatsächlich ausnützbare Tiefenschärfe ermittelbar und optisch anzeigbar ist.
